# FASCICULE DE BREVET EUROPEEN

(11) **EP 1 995 138 B1**
(45) Date de publication et mention de la délivrance du brevet: **14.09.2011**
(21) Numéro de dépôt: 08104013.1
(22) Date de dépôt: 19.05.2008
(51) Int. Cl.: B60T 11/16, B60T 11/20, B60T 11/236

(54) **Maître cylindre comportant un joint favorisant la réalimentation**
Hauptbremszylinder, der eine Fuge zum leichteren Nachfüllen der Bremse umfasst
Master cylinder comprising a seal for helping the feedback

(30) Priorité: 21.05.2007 FR 0703602
(43) Date de publication de la demande: 26.11.2008
(73) Titulaire: Robert Bosch GmbH, 70442 Stuttgart (DE)
(72) Inventeur: Gaffe, François, 93140, BONDY - FRANCE (FR); Auguste, Antony, 94350, VILLIER SUR MARNE (FR); Lhuillier, Laurent, 93150, LE BLANC MESNIL (FR); Bernadat, Olivier, 94170, LE PERREUX (FR)
(74) Mandataire: Hurwic, Aleksander Wiktor

(56) Documents cités:
- EP-A- 1 479 582
- WO-A-02/062642
- FR-A- 2 829 450

## Description

L'invention concerne un maître cylindre de freinage pour un véhicule automobile.

L'invention concerne plus particulièrement un maître cylindre de freinage pour un véhicule automobile, du type qui comporte un corps sensiblement axial à l'intérieur d'un alésage duquel est monté coulissant au moins un piston axial, qui est susceptible d'être actionné par un conducteur du véhicule entre une position arrière de repos et une position avant d'application d'un effort de freinage, et qui est rappelé élastiquement vers sa position arrière de repos, du type dans lequel l'alésage comporte deux joints d'étanchéité avant et arrière qui sont interposés entre le piston et l'alésage, le joint d'étanchéité avant délimitant dans l'alésage une chambre d'alimentation arrière et une chambre de pression avant, du type dans lequel le corps comporte un conduit radial d'alimentation qui relie un réservoir extérieur de fluide hydraulique à la chambre d'alimentation arrière et qui débouche entre les deux joints d'étanchéité, du type dans lequel le corps comporte un perçage d'alimentation d'un circuit de freinage qui débouche dans la chambre de pression avant, du type dans lequel le piston comporte un alésage ouvert vers l'avant communiquant d'une part avec la chambre de pression avant et d'autre part avec la périphérie dudit piston par l'intermédiaire d'au moins un perçage qui, lorsque le piston occupe sa position arrière de repos, est agencé entre les deux joints d'étanchéité pour mettre en communication la chambre de pression avant et la chambre d'alimentation arrière et qui, lorsque le piston est mû axialement vers l'avant vers sa position d'application, est susceptible de franchir le joint d'étanchéité avant pour isoler la chambre de pression avant de la chambre d'alimentation arrière et permettre ainsi l'établissement d'une pression de freinage dans la chambre de pression avant, du type dans lequel au moins chaque joint d'étanchéité avant est reçu dans une gorge du corps du maître cylindre et comporte trois lèvres concentriques d'orientation axiale, notamment :
- une première lèvre intérieure dont une extrémité libre est agencée au contact de la périphérie du piston,
- une deuxième lèvre centrale, dont l'extrémité libre est agencée dans une position de repos au contact d'une face avant de la gorge,
- et une troisième lèvre extérieure, dont une extrémité libre est agencée dans une position de repos au contact d'une face de fond périphérique de la gorge,
   la deuxième lèvre centrale et la troisième lèvre extérieure étant susceptibles, lorsque la chambre avant de pression est soumise à une dépression causée par le retour du piston de sa position avant d'application à sa position de repos ou bien par l'activation d'un dispositif de contrôle de trajectoire faisant partie du circuit de freinage, de se décoller de la face avant et de la face périphérique de fond de la gorge pour permettre la réalimentation de la chambre de pression avant par le réservoir.

On connaît de nombreux exemples de maîtres cylindres de freinage de ce type notamment décrit dans WO 02/062642.

Dans la plupart des maîtres cylindres de ce type, le piston est généralement guidé dans l'alésage par l'intermédiaire d'au moins deux portées annulaires de l'alésage, qui sont agencées respectivement en avant du joint d'étanchéité avant et en arrière du joint d'étanchéité arrière.

La portée qui est agencée en avant du joint d'étanchéité avant jouxte la gorge de réception du joint d'étanchéité avant et elle comporte des rainures de dites de réalimentation qui sont destinées à permettre le passage du liquide de freinage dans les rainures lorsque la chambre avant de pression est soumise à une dépression causée par le retour du piston de sa position avant d'application à sa position de repos ou bien lorsqu'un dispositif de contrôle de trajectoire de type "ESP" du circuit de freinage est activé et crée une dépression dans la chambre avant de pression.

La gorge de réception du joint avant comporte généralement une face avant transversale droite réunie à une face arrière transversale droite par l'intermédiaire d'une paroi de fond périphérique. La deuxième lèvre centrale et la troisième lèvre extérieure du joint d'étanchéité avant comportent des extrémités qui sont destinées à adhérer respectivement à la face avant transversale droite et à la paroi de fond périphérique de la gorge.

Lorsque le joint d'étanchéité avant est soumis à une dépression, les extrémités de la deuxième lèvre centrale et de la troisième lèvre extérieure du joint d'étanchéité avant se décollent respectivement de la face avant transversale droite de la gorge et de la paroi de fond périphérique de la gorge, afin de permettre respectivement la réalimentation du réservoir à l'aide de la chambre de pression avant ou bien la réalimentation de la chambre de pression avant par le réservoir.

Or, on a constaté que dans bien des cas, la lèvre centrale et la troisième lèvre extérieure du joint d'étanchéité avant ne se décollent qu'imparfaitement de la face avant de la gorge et de la paroi de fond périphérique de la gorge. Dans ce cas, le débit de liquide de freinage est insuffisant pour que la réalimentation s'effectue correctement.

Ceci est particulièrement flagrant lorsque le véhicule est équipé d'un dispositif de contrôle de trajectoire de type "ESP" pour lequel le besoin de liquide de freinage, qui est destiné à alimenter un ou plusieurs des étriers de frein du véhicule, peut être important même lorsque le piston occupe une position d'application dans la chambre de pression. Un débit insuffisant peut conduire à un défaut d'efficacité, ou du moins à une lenteur de réaction préjudiciable du dispositif de contrôle de trajectoire de type "ESP".

Pour remédier à cet inconvénient, l'invention propose maître cylindre de freinage comportant des moyens d'augmentation du débit de réalimentation au travers du joint avant.

Dans ce but, l'invention propose un maître cylindre de freinage du type décrit précédemment, caractérisé en ce que la face avant de la gorge est conformée au moins en partie en pente d'inclinaison déterminée pour faciliter le décollement par basculement de la deuxième lèvre centrale, afin de faciliter le décollement par basculement de la troisième lèvre extérieure.

Selon d'autres caractéristiques de l'invention :
- une partie de la face avant de la gorge est conformée en pente continue de l'alésage du corps du maître cylindre jusqu'à une partie intermédiaire de ladite face avant, et une autre partie de la face avant de la gorge est d'orientation radiale jusqu'à la jonction avec sa paroi périphérique de fond,
- la face avant de la gorge est conformée en pente continue suivant toute sa hauteur,
- la pente forme un angle réduit avec la direction radiale pour limiter le déplacement axial de la troisième lèvre extérieure lors de son basculement afin de limiter la translation du joint dans la gorge,
- la pente forme un angle de sensiblement 15 degrés avec la direction radiale,
- le maître cylindre est de type tandem et il comporte dans son corps sensiblement axial un alésage à l'intérieur duquel sont montés coulissants deux pistons axiaux et deux joints d'étanchéité avant qui sont reçus dans deux gorges dont les faces avant sont conformées au moins en partie en pente.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe axiale d'un maître cylindre de type "tandem" selon l'invention,
- la figure 2 est une demi-vue en coupe axiale d'un joint d'étanchéité avant préalablement à son montage dans la gorge ;
- la figure 3 est une demi-vue en coupe axiale d'un joint d'étanchéité monté dans une gorge selon un second mode de réalisation de l'invention et représenté dans une position de repos;
- la figure 4 est une demi-vue en coupe axiale d'un joint d'étanchéité monté dans une gorge selon un premier mode de réalisation de l'invention et représenté dans une position de repos;
- la figure 5 est une demi-vue en coupe axiale du joint de la figure 3 représenté dans une position de décollement;
- la figure 6 est une demi-vue en coupe axiale du joint de la figure 4 représenté dans une position de décollement;

Dans la description qui va suivre, des chiffres de référence identiques désignent des pièces identiques ou ayant des fonctions similaires.

Par convention, les termes "avant" et "arrière", désignent respectivement des éléments ou des positions orientés respectivement vers la gauche et la droite des figures.

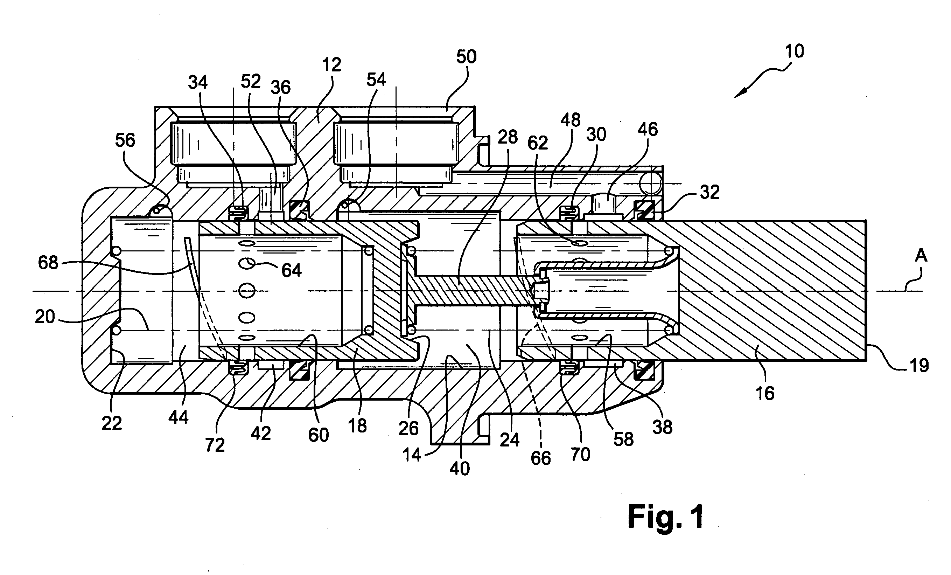

On a représenté sur la figure 1 l'ensemble d'un maître cylindre 10 de freinage pour un véhicule automobile.

De manière connue, le maître cylindre 10 comporte un corps 12 sensiblement axial d'axe "A" à l'intérieur d'un alésage 14 duquel est monté coulissant au moins un piston axial.

Dans le mode de réalisation préféré de l'invention, le maître cylindre 10 est un maître cylindre de type "tandem" qui comporte un corps 12 sensiblement axial d'axe A à l'intérieur d'un alésage 14 duquel sont montés coulissants deux pistons axiaux 16 et 18.

Cette configuration n'est toutefois pas limitative de l'invention et le maître cylindre 10 pourrait être un maître cylindre simple ne comportant qu'un seul piston coulissant.

Le piston 16, dit piston primaire 16, est destiné à permettre l'établissement d'une pression hydraulique dans un circuit primaire de freinage du véhicule (non représenté), et le piston 18, dit piston secondaire 18, est destiné à permettre l'établissement d'une pression hydraulique dans un circuit secondaire de freinage du véhicule (non représenté) qui est indépendant du circuit primaire de freinage du véhicule.

Chacun de ces deux circuits est associé à un dispositif de contrôle de trajectoire qui est susceptible de commander l'actionnement d'organes de freinages du véhicule, tels que des étriers de frein, de manière indépendante du maître cylindre.

Le piston primaire 16 est susceptible d'être actionné directement par un conducteur du véhicule. Par exemple, une extrémité arrière 19 du piston primaire 16 est susceptible d'être reliée à un servomoteur (non représenté) qui amplifie les efforts exercés sur une pédale de freinage du véhicule.

Le piston secondaire 18 est susceptible d'être actionné indirectement par le conducteur du véhicule, notamment par le piston primaire 16.

Chaque piston primaire 16 ou secondaire 18 est ainsi mobile entre une position arrière de repos, qui est représentée à la figure 1, et au moins une position avant d'application d'un effort de freinage (non représentée).

De manière connue, chaque piston primaire 16 ou secondaire 18 est rappelé élastiquement vers sa position arrière de repos, par exemple à l'encontre d'une butée (non représentée).

En particulier, le piston secondaire 18 est rappelé vers l'arrière par un ressort 20 qui prend appui sur une face 22 transversale d'extrémité avant de l'alésage 14 et sur le piston secondaire 18, et le piston primaire 16 est rappelé élastiquement vers l'arrière par un ressort 24 qui prend appui sur une face 26 transversale arrière du piston secondaire 18 et sur le piston primaire 16. Plus particulièrement, le ressort 24 étant notamment de grande longueur, il est monté autour d'un vérin coulissant 28 qui est interposé entre la face 26 transversale arrière du piston secondaire 18 et le piston primaire 16.

L'alésage 14 comporte deux joints primaires d'étanchéité avant 30 et arrière 32 qui sont interposés respectivement entre le piston primaire 16 et l'alésage 14 et deux joints secondaires d'étanchéité avant 34 et arrière 36 qui sont interposés respectivement entre le piston secondaire 18 et l'alésage 14.

De ce fait, le joint primaire d'étanchéité avant 30 délimite dans l'alésage 14 une chambre 38 d'alimentation arrière et une chambre 40 de pression avant. De même, le joint secondaire d'étanchéité avant 34 délimite dans l'alésage 14 une chambre 42 d'alimentation arrière et une chambre 44 de pression avant.

Le corps 12 comporte un conduit 46 primaire radial d'alimentation qui relie un réservoir extérieur primaire (non représenté) de fluide hydraulique à la chambre d'alimentation primaire arrière 38 et qui débouche entre les deux joints primaires d'étanchéité 30 et 32.

En particulier, le conduit 46 primaire radial d'alimentation est par exemple relié par l'intermédiaire d'un conduit longitudinal intermédiaire 48 à un orifice 50 qui débouche à l'extérieur du corps 12 et qui est destiné à recevoir une bouche de sortie (non représentée) du réservoir primaire associé.

Le corps 12 comporte un conduit 52 secondaire radial d'alimentation qui relie un réservoir extérieur secondaire (non représenté) de fluide hydraulique à la chambre d'alimentation secondaire arrière 42 et qui débouche entre les deux joints secondaires d'étanchéité 34 et 36.

Le corps comporte encore deux perçages primaire 54 et secondaire 56 d'alimentation des circuits de freinage primaire et secondaires associés qui débouchent dans les chambres avant de pression primaire 40 et secondaire 44 associées.

Entre autres modes de réalisation connus de l'état de la technique, chaque piston 16, 18 comporte un alésage 58, 60 ouvert vers l'avant communiquant d'une part avec la chambre 40, 44 de pression avant associée et d'autre part avec la périphérie dudit piston 16,18 par l'intermédiaire d'au moins un perçage 62, 64 dont la position par rapport au joint d'étanchéité associé avant primaire ou secondaire 30, 34 détermine la mise en communication sélective des chambres arrière d'alimentation primaire et secondaire 38, 42 avec les chambres de pression avant primaire et secondaire 40, 44.

En effet, lorsque le piston 16, 18 occupe sa position arrière de repos de la figure 1, le perçage associé 62, 64 est agencé entre les deux joints d'étanchéité primaire 30, 32 et secondaire 34, 36 pour mettre en communication la chambre de pression avant 40, 44 et la chambre d'alimentation arrière 38, 42.

Lorsque le piston 16, 18 est mû axialement vers l'avant vers sa position d'application (non représentée), le perçage 62, 64 franchit le joint d'étanchéité avant 30, 34 pour isoler la chambre de pression avant 40, 44 de la chambre d'alimentation arrière 38, 42, ce qui permet l'établissement d'une pression de freinage dans chaque chambre de pression avant 40, 44.

Par ailleurs, comme l'illustre la figure 1, chaque joint d'étanchéité avant 30, 34 est reçu dans une gorge associée 70, 72 du corps 12 du maître cylindre.

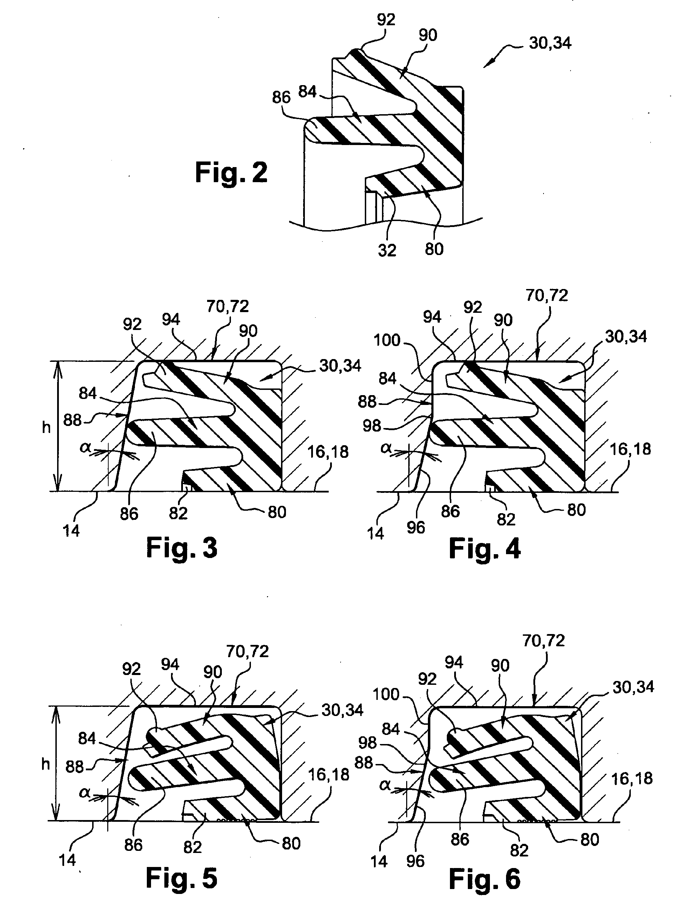

Comme l'illustrent les figures 2 et suivantes, chaque joint d'étanchéité avant 30, 34 comporte trois lèvres concentriques d'orientation axiale, notamment :
- une première lèvre intérieure 80 dont une extrémité libre 82 est destinée à être agencée au contact de la périphérie du piston 16, 18,
- une deuxième lèvre centrale 84, dont l'extrémité libre 86 est agencée dans une position de repos au contact d'une face 88 avant de la gorge 70,72,
- et une troisième lèvre extérieure 90, dont une extrémité 92 libre est agencée dans une position de repos au contact d'une face 94 de fond périphérique de la gorge 70,72

Lorsque le piston 16, 18 revient de sa position avant d'application à sa position de repos, ou lorsqu'un dispositif de contrôle de trajectoire faisant partie du circuit de freinage relié au circuits de freinage primaire et secondaire est activé, il se crée une dépression dans les chambres de pression avant primaire et secondaire 40, 44 qui conduisent la deuxième lèvre centrale 84 et la troisième lèvre extérieure 90 à se décoller de la face avant 88 et de la face 84 périphérique de fond de la gorge 70, 72 pour permettre la réalimentation de la chambre de pression avant 40, 44 par le réservoir

D'une manière analogue, le décollement des lèvres 84, 90 des joints 30, 34 permet la réalimentation des chambres de pression avant primaire et secondaire 40, 44 par les conduits primaire 46 et secondaire 52 radiaux d'alimentation, et donc par les réservoirs associés, lorsqu'un dispositif de contrôle de trajectoire du circuit de freinage relié au circuits de freinage primaire et secondaire est activé.

La réalimentation est par ailleurs rendue possible en avant des joints 30, 34 par une rainure 66, 68, qui est formée dans l'alésage en avant d'une gorge 70, 72 de réception du joint 30, 34 d'étanchéité avant.

Conventionnellement, la face avant 88 de la gorge 70, 72 est une face transversale droite.

Or, on a constaté que dans bien des cas, la lèvres centrale 84 et la troisième lèvre extérieure 90 des joints 30, 34 d'étanchéité avant ne se décollent qu'imparfaitement de la face avant 88 de la gorge 70, 72 et de la paroi de fond périphérique de la gorge. Dans ce cas, le débit de liquide de freinage est insuffisant pour que la réalimentation s'effectue correctement.

Pour remédier à cet inconvénient, l'invention propose une gorge 70, 72 de profil adapté.

A cet effet, conformément à l'invention, la face avant 88 de la gorge 71, 72 est conformée au moins en partie en pente d'inclinaison "α" déterminée pour faciliter le décollement par basculement de la deuxième lèvre centrale 84, afin de faciliter le décollement par basculement de la troisième lèvre extérieure 90.

Selon un premier mode de réalisation qui a été représenté aux figures 4 et 6, une partie 96 de la face avant 88 de la gorge 70, 72 est conformée en pente continue de l'alésage 14 du corps 12 du maître cylindre jusqu'à une partie intermédiaire 98 de ladite face avant, et une autre partie 100 de la face avant de la gorge 70, 72 est d'orientation radiale jusqu'à la jonction avec sa paroi périphérique de fond.

Dans cette configuration, l'extrémité 86 de la lèvre centrale 84 est agencée au repos sensiblement à la partie intermédiaire de jonction 98 des deux parties 96, 100, comme représenté à la figure 4, et se décolle de la face avant 88 lorsqu'une dépression est établie, comme représenté à la figure 6. Le basculement de la lèvre centrale 84 provoque une déformation des joints 70, 72, ce qui a pour effet de provoquer le basculement de la lèvre extérieure 90 dont l'extrémité 92 se décolle de la paroi de fond périphérique 94, comme représenté à la figure 6.

Selon un second mode de réalisation de l'invention qui a été représenté aux figures 3 et 5, la face avant 88 de la gorge 70, 72 est conformée en pente continue suivant toute sa hauteur "h".

De préférence, dans ce mode de réalisation, la pente forme un angle "α" réduit avec la direction radiale pour limiter le déplacement axial de la troisième lèvre extérieure 90 lors de son basculement afin de limiter la translation du joint 30, 34 dans la gorge 70, 72.

A cet effet, la pente forme de préférence un angle "α" de sensiblement 15 degrés avec la direction radiale.

Il sera compris que l'invention n'est pas limitée à un maître cylindre 10 comportant un seul piston mais trouve essentiellement à s'appliquer à un maître cylindre 10 de type tandem qui comporte dans son corps 12 sensiblement axial un alésage 14 à l'intérieur duquel sont montés coulissants deux pistons axiaux 16, 18, et deux joints 30, 34 d'étanchéité avant qui sont reçus dans deux gorges 70, 72 dont les faces avant 88 sont conformées au moins en partie en pente.

L'invention permet donc de disposer d'un maître cylindre permettant des réalimentations rapides des circuits de freinage associés.

## Revendications

1. Maître cylindre (10) de freinage pour un véhicule automobile, du type qui comporte un corps (12) sensiblement axial à l'intérieur d'un alésage (14) duquel est monté coulissant au moins un piston axial (16, 18), qui est susceptible d'être actionné par un conducteur du véhicule entre une position arrière de repos et une position avant d'application d'un effort de freinage, et qui est rappelé élastiquement vers sa position arrière de repos, du type dans lequel l'alésage (14) comporte deux joints d'étanchéité avant (30, 34) et arrière (32, 36) qui sont interposés entre le piston (16, 18) et l'alésage (14), le joint d'étanchéité avant (30, 34) délimitant dans l'alésage (14) une chambre d'alimentation arrière (38, 42) et une chambre de pression avant (40, 44), du type dans lequel le corps (12) comporte un conduit radial (46, 52) d'alimentation qui relie un réservoir extérieur de fluide hydraulique à la chambre d'alimentation arrière (38, 42) et qui débouche entre les deux joints d'étanchéité (30, 32, 34, 36), du type dans lequel le corps (12) comporte un perçage (54, 56) d'alimentation d'un circuit de freinage qui débouche dans la chambre de pression avant (40, 44), du type dans lequel le piston comporte un alésage (58, 60) ouvert vers l'avant communiquant d'une part avec la chambre (40, 44) de pression avant et d'autre part avec la périphérie dudit piston (16, 18) par l'intermédiaire d'au moins un perçage (62, 64) qui, lorsque le piston (16, 18) occupe sa position arrière de repos, est agencé entre les deux joints d'étanchéité (30, 32, 34, 36) pour mettre en communication la chambre de pression avant (40, 44) et la chambre d'alimentation arrière (38, 42) et qui, lorsque le piston (16, 18) est mû axialement vers l'avant vers sa position d'application, est susceptible de franchir le joint d'étanchéité avant (30, 34) pour isoler la chambre de pression avant (40, 44) de la chambre d'alimentation arrière (38, 42) et permettre ainsi l'établissement d'une pression de freinage dans la chambre de pression avant (40, 44), du type dans lequel au moins chaque joint d'étanchéité avant (30, 34) est reçu dans une gorge (70, 72) du corps du maître cylindre et comporte trois lèvres concentriques d'orientation axiale, notamment :
- une première lèvre intérieure (80) dont une extrémité libre (82) est agencée au contact de la périphérie du piston (16, 18),
- une deuxième lèvre centrale (84), dont l'extrémité libre (86) est agencée dans une position de repos au contact d'une face avant (88)de la gorge (70, 72),
- et une troisième lèvre extérieure (80), dont une extrémité libre (92) est agencée dans une position de repos au contact d'une face (94)de fond périphérique de la gorge (70, 72),
la deuxième lèvre centrale (84) et la troisième lèvre extérieure (90) étant susceptibles, lorsque la chambre avant de pression (40, 44) est soumise à une dépression causée par le retour du piston (16, 18) de sa position avant d'application à sa position de repos ou bien par l'activation d'un dispositif de contrôle de trajectoire faisant partie du circuit de freinage, de se décoller de la face avant (88) et de la face (94) périphérique de fond de la gorge (70, 72) pour permettre la réalimentation de la chambre de pression avant (40, 44) par le réservoir,
**caractérisé en ce que** la face avant (88) de la gorge est conformée au moins en partie en pente d'inclinaison (α) déterminée pour faciliter le décollement par basculement de la deuxième lèvre centrale (84), afin de faciliter le décollement par basculement de la troisième lèvre (90) extérieure.

2. Maître cylindre (10) selon la revendication précédente, **caractérisé en ce qu'**une partie (96) de la face avant (88) de la gorge (71, 72) est conformée en pente continue de l'alésage (14) du corps du maître cylindre jusqu'à une partie intermédiaire (98) de ladite face avant (88), et **en ce qu'**une autre partie (100) de la face avant (88) de la gorge (70, 72) est d'orientation radiale jusqu'à la jonction avec sa paroi (94) périphérique de fond.

3. Maître cylindre (10) selon la revendication 1 **caractérisé en ce que** la face avant (88) de la gorge est conformée en pente continue suivant toute sa hauteur (h).

4. Maître cylindre (10) selon la revendication précédente, **caractérisé en ce que** la pente forme un angle (α) réduit avec la direction radiale pour limiter le déplacement axial de la troisième lèvre extérieure (90) lors de son basculement afin de limiter la translation du joint (30, 34) dans la gorge (70, 72).

5. Maître cylindre (10) selon la revendication précédente, **caractérisé en ce que** la pente forme un angle (α) de sensiblement 15 degrés avec la direction radiale.

6. Maître cylindre (10) selon l'une quelconque des revendications précédentes, **caractérisé en ce qu'**il est de type tandem et comporte dans son corps (12) sensiblement axial un alésage à l'intérieur duquel sont montés coulissants deux pistons axiaux (16, 18), et deux joints (30, 34) d'étanchéité avant qui sont reçus dans deux gorges (70, 72) dont les faces avant (88) sont conformées au moins en partie en pente.

## Claims

1. Brake master cylinder (10) for a motor vehicle, of the type which comprises a substantially axial body (12) inside a bore (14) of which is slideably mounted at least one axial piston (16, 18) which is capable of being actuated by a driver of the vehicle between a rear rest position and a forward braking force application position, and which is returned elastically toward its rear rest position, of the type in which the bore (14) comprises two seals, front (30, 34) and rear (32, 36), which are interposed between the piston (16, 18) and the bore (14), the front seal (30, 34) delimiting, in the bore (14), a rear supply chamber (38, 42) and a front pressure chamber (40, 44), of the type in which the body (12) comprises a radial supply duct (46, 52) which connects an external hydraulic fluid reservoir to the rear supply chamber (38, 42) and which opens out between the two seals (30, 32, 34, 36), of the type in which the body (12) comprises a braking circuit supply hole (54, 56) which opens into the front pressure chamber (40, 44), of the type in which the piston comprises a bore (58, 60), open to the front, communicating on the one hand with the front pressure chamber (40, 44) and on the other hand with the periphery of said piston (16, 18) by way of at least one hole (62, 64) which, when the piston (16, 18) occupies its rear rest position, is arranged between the two seals (30, 32, 34, 36) so as to open communication between the front pressure chamber (40, 44) and the rear supply chamber (38, 42) and which, when the piston (16, 18) is moved axially forward toward its application position, is capable of passing beyond the front seal (30, 34) so as to isolate the front pressure chamber (40, 44) from the rear supply chamber (38, 42) and thus allow a braking pressure to be established in the front pressure chamber (40, 44), of the type in which at least each front seal (30, 34) is accommodated in a groove (70, 72) in the body of the master cylinder and comprises three concentric lips with an axial orientation, in particular:
- a first inner lip (80) of which a free end (82) is arranged in contact with the periphery of the piston (16, 18),
- a second central lip (84) of which the free end (86) is arranged, in a rest position, in contact with a front face (88) of the groove (70, 72), and
- a third outer lip (80) of which a free end (92) is arranged, in a rest position, in contact with a peripheral bottom face (94) of the groove (70, 72),
the second central lip (84) and the third outer lip (90) being capable, when the front pressure chamber (40, 44) is exposed to a partial vacuum caused by the return of the piston (16, 18) from its forward application position to its rest position or else by the activation of a trajectory control device forming part of the braking circuit, of separating from the front face (88) and from the peripheral bottom face (94) of the groove (70, 72) so as to allow the front pressure chamber (40, 44) to be resupplied by the reservoir,
**characterized in that** the front face (88) of the groove is configured at least in part as a slope of defined inclination (α) so as to facilitate the separation by tilting of the second central lip (84), in order to facilitate the separation by tilting of the third outer lip (90).

2. Master cylinder (10) according to the preceding claim, **characterized in that** one portion (96) of the front face (88) of the groove (71, 72) is configured as a continuous slope from the bore (14) of the master cylinder body to an intermediate portion (98) of said front face (88), and **in that** another portion (100) of the front face (88) of the groove (70, 72) has a radial orientation to the junction with its bottom peripheral wall (94).

3. Master cylinder (10) according to claim 1, **characterized in that** the front face (88) of the groove is configured as a continuous slope over its full height (h).

4. Master cylinder (10) according to the preceding claim, **characterized in that** the slope forms a reduced angle (α) with the radial direction so as to limit the axial displacement of the third outer lip (90) as it tilts in order to limit the translational movement of the seal (30, 34) in the groove (70, 72).

5. Master cylinder (10) according to the preceding claim, **characterized in that** the slope forms an angle (α) of substantially 15 degrees with the radial direction.

6. Master cylinder (10) according to any one of the preceding claims, **characterized in that** it is of the tandem type and comprises, in its substantially axial body (12), a bore inside which two axial pistons (16, 18) are slideably mounted, and two front seals (30, 34) which are accommodated in two grooves (70, 72) whose front faces (88) are configured at least in part as a slope.

## Patentansprüche

1. Hauptbremszylinder (10) für ein Kraftfahrzeug, vom Typ mit einem im Wesentlichen axialen Körper (12) mit einer Öffnung (14), in der mindestens ein axialer Kolben (16, 18) gleitend angebracht ist, der von einem Fahrzeugfahrer zwischen einer hinteren Ruhestellung und einer vorderen Stellung zum Aufbringen einer Bremskraft betätigt werden kann und elastisch in seine hintere Ruhestellung zurückgestellt wird, vom Typ, bei dem die Öffnung (14) zwei vordere Dichtungen (30, 34) und zwei hintere Dichtungen (32, 36) aufweist, die zwischen dem Kolben (16, 18) und der Öffnung (14) angeordnet sind, wobei die vordere Dichtung (30, 34) in der Öffnung (14) eine hintere Versorgungskammer (38, 42) und eine vordere Druckkammer (40, 44) begrenzt, vom Typ, bei dem der Körper (12) eine radiale Versorgungsleitung (46, 52) aufweist, die einen äußeren Hydraulikfluidbehälter mit der hinteren Versorgungskammer (38, 42) verbindet und zwischen den beiden Dichtungen (30, 32, 34, 36) ausmündet, vom Typ, bei dem der Körper (12) eine Bohrung (54, 56) zur Versorgung eines Bremskreises aufweist, die in die vordere Druckkammer (40, 44) mündet, vom Typ, bei dem der Kolben eine nach vorne geöffnete Öffnung (58, 60) aufweist, die zum einen mit der vorderen Druckkammer (40, 44) und zum anderen über mindestens eine Bohrung (62, 64) mit dem Umfang des Kolbens (16, 18) verbunden ist, die in der hinteren Ruhestellung des Kolbens (16, 18) zwischen den beiden Dichtungen (30, 32, 34, 36) angeordnet ist, um die vordere Druckkammer (40, 44) und die hintere Versorgungskammer (38, 42) zu verbinden, und die bei einer axialen Verschiebung des Kolbens (16, 18) nach vorne in seine Beaufschlagungsstellung die vordere Dichtung (30, 34) überwinden kann, um die vordere Druckkammer (40, 44) von der hinteren Versorgungskammer (38, 42) zu trennen und somit den Aufbau eines Bremsdrucks in der vorderen Druckkammer (40, 44) zu ermöglichen, vom Typ, bei dem zumindest jede vordere Dichtung (30, 34) in einer Nut (70, 72) des Hauptzylinderkörpers aufgenommen ist und drei konzentrische, axial ausgerichtete Lippen aufweist, insbesondere:
- eine erste, innere Lippe (80), bei der ein freies Ende (82) so angeordnet ist, dass es den Umfang des Kolbens (16, 18) berührt,
- eine zweite, mittlere Lippe (84), bei der das freie Ende (86) in einer Ruhestellung so angeordnet ist, dass es eine vordere Fläche (88) der Nut (70, 72) berührt,
- und eine dritte, äußere Lippe (90), bei der ein freies Ende (92) in einer Ruhestellung so angeordnet ist, dass es eine hintere Umfangsfläche (94) der Nut (70, 72) berührt,
wobei die zweite, mittlere Lippe (84) und die dritte, äußere Lippe (90) sich von der vorderen Fläche (88) und von der hinteren Umfangsfläche (94) der Nut (70, 72) lösen können, um die erneute Versorgung der vorderen Druckkammer (40, 44) über den Behälter zu ermöglichen, wenn die vordere Druckkammer (40, 44) einem Unterdruck ausgesetzt ist, der durch das Zurückstellen des Kolbens (16, 18) von seiner vorderen Beaufschlagungsstellung in seine Ruhestellung oder durch die Aktivierung einer zum Bremskreis gehörenden Spurkontrollvorrichtung hervorgerufen wird,
**dadurch gekennzeichnet, dass** die vordere Fläche (88) der Nut zumindest teilweise schräg mit einer vorbestimmten Neigung (α) ausgebildet ist, um das Lösen der zweiten, mittleren Lippe (84) durch Kippen zu vereinfachen und somit das Lösen der dritten, äußeren Lippe (90) durch Kippen zu vereinfachen.

2. Hauptzylinder (10) nach dem vorhergehenden Anspruch, **dadurch gekennzeichnet, dass** ein Abschnitt (96) der vorderen Fläche (88) der Nut (70, 72) mit einer durchgehenden Schräge von der Öffnung (14) des Hauptzylinderkörpers bis zu einem Mittelabschnitt (98) der vorderen Fläche (88) ausgebildet ist und ein weiterer Abschnitt (100) der vorderen Fläche (88) der Nut (70, 72) bis zur Verbindung mit ihrer hinteren Umfangswand (94) radial ausgerichtet ist.

3. Hauptzylinder (10) nach Anspruch 1, **dadurch gekennzeichnet, dass** die vordere Fläche (88) der Nut über ihre gesamte Höhe (h) mit einer durchgehenden Schräge ausgebildet ist.

4. Hauptzylinder (10) nach dem vorhergehenden Anspruch, **dadurch gekennzeichnet, dass** die Schräge mit der radialen Ausrichtung einen verkleinerten Winkel (α), so dass die axiale Verlagerung der dritten, äußeren Lippe (90) bei ihrem Kippen begrenzt ist und somit die Translationsbewegung der Dichtung (30, 34) in der Nut (70, 72) begrenzt ist.

5. Hauptzylinder (10) nach dem vorhergehenden Anspruch, **dadurch gekennzeichnet, dass** die Schräge mit der radialen Ausrichtung einen Winkel (α) von im Wesentlich 15 Grad bildet.

6. Hauptzylinder (10) nach einem der vorhergehenden Ansprüche, **dadurch gekennzeichnet, dass** er ein Tandem-Hauptzylinder ist und in seinem im Wesentlichen axialen Körper (12) eine Öffnung aufweist, in der zwei axiale Kolben (16, 18) gleitend angebracht sind, sowie zwei vordere Dichtungen (30, 34), die in zwei Nuten (70, 72) aufgenommen sind, deren Vorderflächen (88) zumindest teilweise schräg ausgebildet sind.
